# EUROPÄISCHE PATENTSCHRIFT

(11) **EP 2 518 360 B1**
(45) Veröffentlichungstag und Bekanntmachung des Hinweises auf die Patenterteilung: **25.12.2013**
(21) Anmeldenummer: 12002616.6
(22) Anmeldetag: 13.04.2012
(51) Int. Cl.: F16D 51/20, F16D 121/20, F16D 127/12

(54) **Innenbackenbremse mit elektromagnetischer Betätigungseinrichtung**
Drum brake with electromagnetic actuation device
Frein à tambour à mâchoire interne doté d'un dispositif d'actionnement électromagnétique

(30) Priorität: 29.04.2011 DE 102011100088
(43) Veröffentlichungstag der Anmeldung: 31.10.2012
(73) Patentinhaber: Knott GmbH, 83125 Eggstätt (DE)
(72) Erfinder: Klumpner, Andreas, 83368 St. Georgen (DE); Klumpner, Bernhard, 83368 St. Georgen (DE)
(74) Vertreter: Bauer, Friedrich

(56) Entgegenhaltungen:
- US-A- 1 861 591
- US-A- 1 973 551
- US-A- 3 037 586

## Beschreibung

Die Erfindung betrifft eine Innenbackenbremse mit einer elektromagnetischen Betätigungseinrichtung gemäß dem Oberbegriff des Anspruches 1.

Innenbackenbremsen mit elektromagnetischer Betätigungseinrichtung, d.h. Trommelbremsen mit einer innerhalb der Bremstrommel angeordneten Betätigungseinrichtung für die Bremsbacken, deren Betätigungskraft elektromagnetisch erzeugt und über mechanische Elemente an die Bremsbacken weitergegeben wird, sind bekannt. So ist aus der US 3,037,586 eine Innenbackenbremse gemäß dem Oberbegriff des Anspruches 1 bekannt, bei der ein ringförmiger Elektromagnet verwendet wird, der bei einem Bremsvorgang, d.h. bei Erregung des Elektromagneten, durch Magnetkraft eine drehfest mit der Bremstrommel verbundene Ankerscheibe anzieht und dadurch mit dieser in Reibkontakt gelangt. Hierdurch wird der Elektromagnet ein kleines Stück von der Bremstrommel mitgedreht. Mit der Rückseite des ringförmigen Magnetkörpers sind zwei gegenüberliegende Betätigungsnocken in der Form von Kurvenscheiben fest verbunden. Die Kurvenscheiben wirken derart mit zwei zwischen den Stegen der beiden Bremsbacken gelagerten Rollen zusammen, dass eine Verdrehung des Elektromagneten in Drehrichtung der Bremstrommel zu einer radialen Bewegung der Bremsbacken nach außen führt und diese zur Anlage an die Bremstrommel bringt. Die Abstützung der beiden Bremsbacken erfolgt an zwei gegenüberliegenden Bolzen, die mit dem Bremsträger verbunden sind. An diesen Bolzen sind Rollen vorgesehen, an denen der Magnetkörper mit seiner Außenumfangsfläche anliegt, wodurch der Elektromagnet in radialer und axialer Richtung geführt wird.

Bei dieser bekannten Innenbackenbremse erfolgt die Krafteinleitung auf die Bremsbacken etwa in der Mitte der Bremsbacken, d.h. um 90° versetzt zu den Abstützbolzen, an denen die Bremsbacken gelagert sind. Hierdurch ergibt sich eine relativ schlechte Ausnutzung der Betätigungskräfte. Die Lagerung des ringförmigen Magnetkörpers an seiner Außenumfangsfläche sowie die Notwendigkeit, die Kurvenscheiben radial innerhalb derjenigen Rollen vorzusehen, über welche die Bremsbacken radial nach außen gedrückt werden, verringert die mögliche Baugröße des Magnetkörpers. Hierdurch können von der Bremstrommel bzw. von der Ankerscheibe nur verhältnismäßig geringe Kräfte auf den Magnetkörper übertragen werden. Weiterhin ist das Verhältnis des für die Nabe frei zur Verfügung stehenden Durchmessers zum Außendurchmesser der Bremsbacken relativ gering. Es ist jedoch grundsätzlich erwünscht, dass dieses Verhältnis möglichst groß ist, um radial innerhalb der Bremsbacken einen möglichst großen freien Einbauraum zur Verfügung zu haben. Ferner ist die Einleitung der Betätigungskraft über kugelgelagerte Rollen sehr kostspielig.

Der Erfindung liegt die Aufgabe zugrunde, eine Innenbackenbremse der eingangs genannten Art zu schaffen, die möglichst einfach und kostengünstig aufgebaut ist, eine hohe Betätigungskraft für die Bremsbacken durch Reibschluss des Elektromagneten mit sich drehenden Teilen erzeugt und eine elektromagnetische Betätigungseinrichtung mit geringer Baugröße aufweist.

Diese Aufgabe wird erfindungsgemäß durch eine Innenbackenbremse mit den Merkmalen des Anspruchs 1 gelöst. Vorteilhafte Ausführungsformen der Erfindung sind in den weiteren Ansprüchen beschrieben.

Bei der erfindungsgemäßen Innenbackenbremse sind die Betätigungsnocken des Elektromagneten in Nachbarschaft der Abstützböcke angeordnet und erstrecken sich in die Zwischenräume zwischen den gegenüberliegenden Stirnflächen der Bremsbackenstege hinein, derart, dass bei einem Verdrehen des Elektromagneten in Umfangsrichtung die Betätigungsnocken an jeweils einer Stirnfläche der Bremsbackenstege anliegen und diese Stirnfläche vom benachbarten Abstützbock entfernen bzw. an diesen annähern.

Bei der erfindungsgemäßen Innenbackenbremse werden die beiden Bremsbacken durch den Elektromagneten unmittelbar betätigt, d.h. die Übertragung der Betätigungskraft von den Betätigungsnocken auf die Bremsbacken erfolgt in Umdrehungsrichtung des Elektromagneten. Dies bedeutet mit anderen Worten, dass der Drehwinkel des Elektromagneten identisch zum Schwenkwinkel der Bremsbacken ist. Zur Überwindung des Lüftspiels der Bremsbacken ist damit nur ein sehr geringer Drehwinkel des Elektromagneten erforderlich. Wird die Innenbackenbremse bei niedriger Drehzahl betrieben, kann damit das ungebremste Weiterrollen des abzubremsenden Fahrzeugs minimiert werden.

Von weiterem Vorteil ist, dass der Elektromagnet in radialer Richtung weit außen, d.h. unmittelbar radial innerhalb der Reibbelag-Trägerbleche der Bremsbacken angeordnet werden kann, so dass Elektromagnete mit großem Durchmesser eingesetzt werden können, die entsprechend große Betätigungskräfte erzeugen können. Übersetzungselemente zur Erhöhung der Betätigungskraft erübrigen sich damit. Kraftverluste bei der Betätigung der Bremse werden auf ein Minimum reduziert. Die Betätigungseinrichtung weist somit einen sehr hohen Wirkungsgrad auf.

Eine präzise Führung der Bremsbacken wird dadurch erreicht, dass die Lage der Bremsbacken durch feststehende Drehpunkte an den Abstützböcken eindeutig bestimmt ist. Dies führt zu einem vorhersehbaren Bremsverhalten ohne Rückkoppelungseffekte. Weiterhin wird eine gleichbleibende Betätigungskraft unabhängig vom Drehwinkel des Elektromagneten erreicht. Hierdurch kann auf eine Nachstelleinrichtung zur Kompensation des Bremsbackenverschleißes verzichtet werden. Ein Verschleiß an den Reibbelägen der Bremsbacken verursacht lediglich einen größeren Drehwinkel des Elektromagneten.

Von besonderem Vorteil ist weiterhin, dass das Verhältnis des für die Nabe frei zur Verfügung stehenden Durchmessers zum Außendurchmesser der Bremsbacken groß ist und beispielsweise 55% bis 65%, insbesondere etwa 60%, betragen kann. Hierdurch steht ein großer freier Einbauraum in Nabennähe zur Verfügung.

Die erfindungsgemäße Innenbackenbremse stellt eine Duplexbremse dar, bei der jede Bremsbacke auf einer Seite mittels eines eigenen Betätigungsnockens betätigt wird. Dadurch sind beide Bremsbacken auflaufend und damit selbstverstärkend. Von besonderem Vorteil ist dabei, dass die vorgenannten Eigenschaften unabhängig von der Drehrichtung sind. Der selbstverstärkende Effekt der Bremsbacken findet damit nicht nur bei Vorwärtsfahrt, sondern in gleicher Weise auch bei Rückwärtsfahrt statt. Die erfindungsgemäße Innenbackenbremse kann auch als Duo-Duplexbremse bezeichnet werden.

Zweckmäßigerweise sind die Betätigungsnocken radial außerhalb oder radial innerhalb der Abstützböcke angeordnet, wobei der Magnetkörper mittels der Betätigungsnocken radial an den Abstützböcken geführt ist. Hierdurch sind keine zusätzlichen Einrichtungen zur Führung des Magnetkörpers erforderlich. Dies vereinfacht den Aufbau und verringert die Herstellkosten.

Vorteilhafterweise weisen die Abstützböcke radial äußere oder innere Umfangsflächen auf, die vorzugsweise in Umfangsrichtung kreisbogenförmig gekrümmt und als Gleitführungsflächen für die Betätigungsnocken ausgebildet sind. Eine derartige Gleitführung ermöglicht eine einfache und exakte Führung des Elektromagneten bei kleiner Baugröße.

Vorteilhafterweise sind die Bremsbacken mittels Backenrückzugfedern gegenseitig vorgespannt, die dicht radial außerhalb oder innerhalb der Betätigungsnocken angeordnet sind. Die Betätigungsnocken weisen dabei einen Radialvorsprung auf, der die Backenrückzugfedern hintergreift und ein axiales Rückhaltemittel für den Magnetkörper am Bremsträger darstellt. Dieses Rückhaltemittel ist insbesondere bei der Montage des Elektromagneten vorteilhaft, da dadurch ein ungewolltes Lösen des Elektromagneten vom Bremsträger verhindert wird. Das Einführen der Betätigungsnocken in den Zwischenraum zwischen den Backenrückzugfedern und den Abstützböcken kann dagegen auf einfache Weise dadurch erfolgen, dass die Backenrückzugfedern etwas radial nach außen gedrückt werden.

Vorteilhaftweise ist der Elektromagnet axial beweglich zwischen Bremsträger und Bremstrommel oder Ankerscheibe angeordnet und mittels Federn axial in Richtung Bremstrommel bzw. Ankerscheibe vorgespannt, so dass der Elektromagnet in permanenter Anlage an der Bremstrommel oder Ankerscheibe gehalten wird. Solange der Elektromagnet nicht erregt ist, wird der Elektromagnet mit nur sehr geringer Kraft gegen die Bremstrommel bzw. Ankerscheibe gedrückt, so dass der Elektromagnet nicht mitgedreht wird. Die permanente Anlage hat jedoch den großen Vorteil, dass zwischen Magnetkörper und Bremstrommel bzw. Ankerscheibe kein Luftspalt vorhanden ist, der die magnetische Haltekraft stark verringern würde. Bei Erregung des Elektromagneten steht damit sofort eine hohe magnetische Kraft zur Verfügung. Darüber hinaus entfällt beim Einleiten eines Bremsvorgangs eine zusätzliche Axialbewegung zwischen Elektromagneten und Bremstrommel bzw. Ankerscheibe. Die Erzeugung der Reibkraft zwischen Elektromagneten und Bremstrommel bzw. Ankerscheibe erfolgt damit sehr unmittelbar und exakt proportional zur anliegenden elektrischen Spannung.

Vorteilhafterweise bestehen die Federn aus Druckfedern, die sich einerseits an den Bremsbackenstegen und andererseits am Magnetkörper abstützen. Dies ermöglicht eine konstruktiv einfache Bauweise. Besonders vorteilhaft ist dabei, wenn die Druckfedern einteilig mit Niederhaltefedern ausgebildet sind, die sich durch die Bremsbackenstege hindurch erstrecken und die Bremsbacken axial am Bremsträger halten. Hierdurch kann die Anzahl der notwendigen Bauteile verringert und die Montage einfach gestaltet werden. Weiterhin wird mittels einer derartigen Kombinationsfeder nur minimaler Platz beansprucht.

Vorteilhafterweise ist der Magnetkörper im Querschnitt U-förmig und weist eine radial äußere Ringwand und eine radial innere Ringwand auf, zwischen denen eine Erregerwicklung und ein Reibbelag angeordnet sind, der mit der Bremstrommel bzw. Ankerscheibe in Anlage bringbar ist. Die Reibpartner und -bedingungen können dabei derart optimiert werden, dass der Reibwert zwischen der Planfläche des Elektromagneten bzw. Reibbelags und der Bremstrommel bzw. Ankerscheibe über weite Betriebsbereiche nahezu konstant bleibt. Die zur Betätigung der Innenbackenbremse genutzte Reibkraft stellt dabei selbst einen Bruchteil der gewünschten Bremskraft dar.

Die Erfindung wird nachfolgend anhand der Zeichnungen beispielhaft näher erläutert. Es zeigen:
- Figur 1 :: eine teilweise aufgeschnittene perspektivische Darstellung einer ersten Ausführungsform der erfindungsgemäßen Innenbackenbremse (ohne Bremstrommel),
- Figur 2 :: eine Explosionsdarstellung der Innenbackenbremse von Figur 1,
- Figur 3 :: eine Seitenansicht der Innenbackenbremse von Figur 1,
- Figur 4 :: einen Schnitt längs der Linie IV-IV von Figur 3,
- Figur 5 :: einen Schnitt längs der Linie V-V von Figur 6,
- Figur 6 :: eine Draufsicht auf die Innenbackenbremse,
- Figur 7 :: einen Schnitt längs der Linie VII-VII von Figur 8,
- Figur 8 :: eine Draufsicht auf die Innenbackenbremse,
- Figur 9 :: eine Seitenansicht einer zweiten Ausführungsform der erfindungsgemäßen Innenbackenbremse (ohne Bremstrommel),
- Figur 10 :: einen Schnitt längs der Linie X-X von Figur 9,
- Figur 11 :: einen Schnitt der zweiten Ausführungsform längs der Linie XI-XI von Figur 12, und
- Figur 12 :: eine Draufsicht auf die Innenbackenbremse von Figur 11.

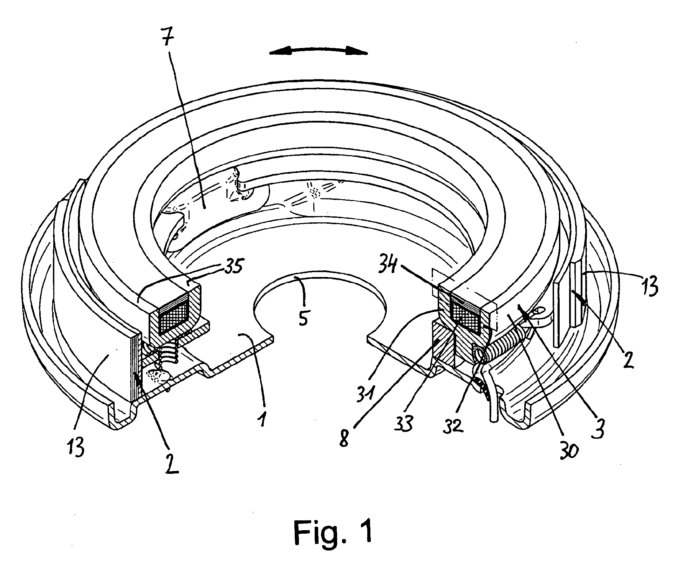

Anhand der Figuren 1 bis 8 wird zunächst eine erste Ausführungsform der erfindungsgemäßen Innenbackenbremse beschrieben.

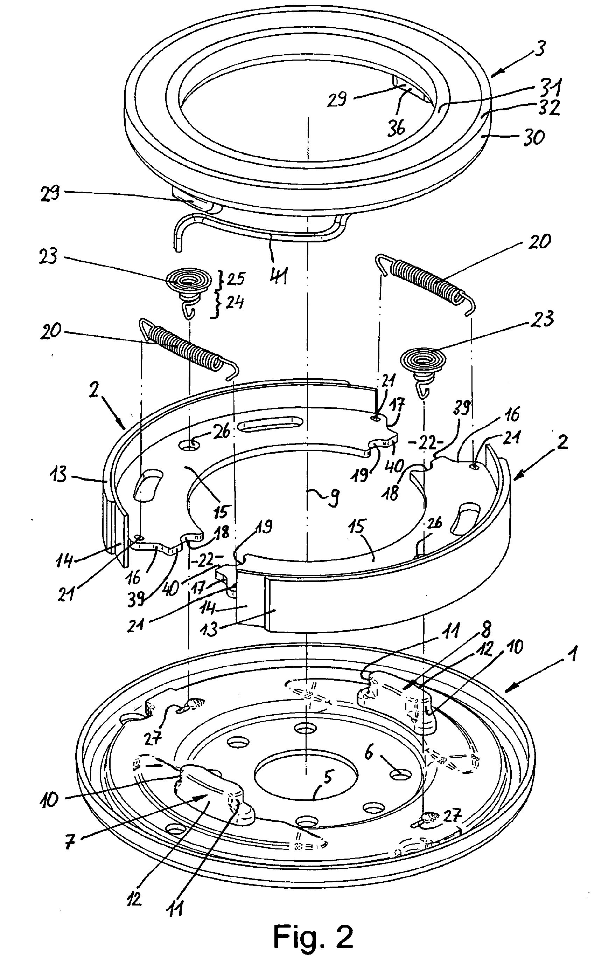

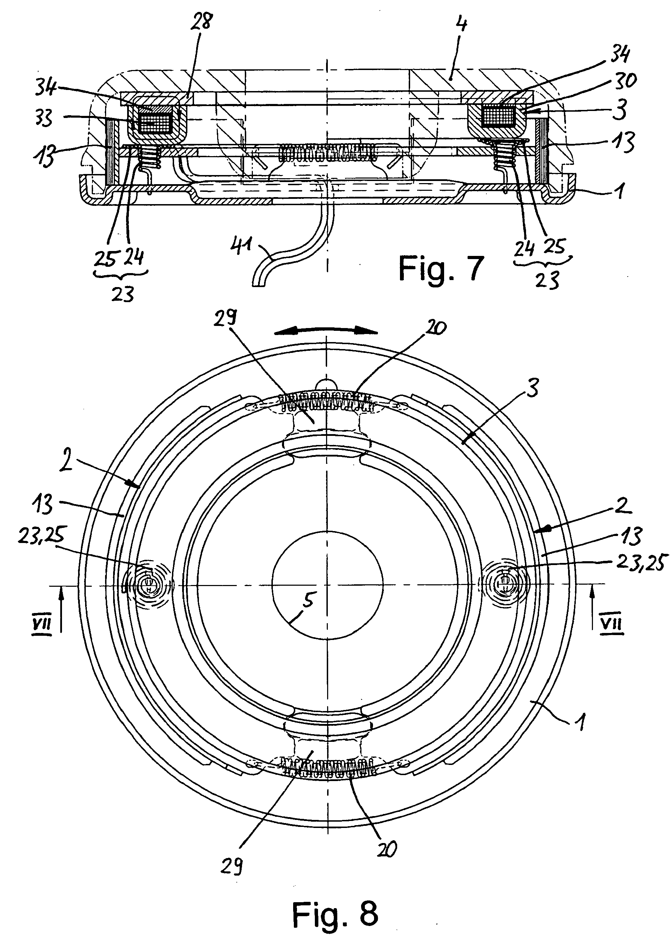

Wie insbesondere aus der Explosionsdarstellung aus Figur 2 ersichtlich, umfasst die Innenbackenbremse einen Bremsträger 1 (Bremsteller), zwei Bremsbacken 2 und einen ringförmigen Elektromagneten 3. Eine Bremstrommel 4, die in Figur 7 mit gestrichelten Linien dargestellt ist und aus einer üblichen Bremstrommel bestehen kann, ist in den übrigen Figuren der Übersichtlichkeit halber nicht dargestellt.

Der Bremsträger 1 weist in üblicher Weise eine zentrale Kreisausnehmung 5 auf, durch die beispielsweise ein nicht dargestellter Achsstummel eines Fahrzeugs hindurchgeführt werden kann, sowie Schraubenlöcher 6 zur Befestigung des Bremsträgers 1 an einem Fahrzeug mittels nicht dargestellter Schrauben.

Von der Hauptebene des Bremsträgers 1 stehen zwei Abstützböcke 7, 8 vor, die relativ zur Mittelachse 9 der Innenbackenbremse auf diametral gegenüberliegenden Seiten angeordnet und mit dem Bremsträger 1 verschweißt sind. Die Abstützböcke 7, 8 haben eine längliche, nierenförmige Gestalt, wobei die Längsmittellinien der Abstützböcke 7, 8 in Umfangsrichtung des Bremsträgers 1 verlaufen. Zwei gegenüberliegende, kreisbogenförmig gekrümmte Abstützflächen 10, 11 dienen zum Abstützen der Bremsbacken 2. Weiterhin weisen die Abstützböcke 7, 8 radial außenliegende Umfangsflächen 12 auf, die in Umfangsrichtung kreisbogenförmig gekrümmt sind und, wie später noch näher erläutert wird, zur radialen Führung des Elektromagneten 3 dienen.

Die Bremsbacken 2 weisen jeweils einen Bremsbelag 13, einen Bremsbelagträger 14, auf dem der Bremsbelag 13 in üblicher Weise befestigt ist, sowie einen Bremsbackensteg 15 auf, der mittig längs des Bremsbelagträgers 14 verläuft. An den beiden endseitigen Stirnflächen 16, 17 eines jeden Bremsbackenstegs 15 sind kreisbogenförmig gekrümmte Abstützflächen 18, 19 in der Form von Vertiefungen ausgebildet, die, solange kein Bremsvorgang stattfindet, an den Abstützflächen 10, 11 der Abstützböcke 7, 8 anliegen. Die beiden Bremsbacken 2 werden dabei durch Backenrückzugfedern 20 zusammengezogen und an den Abstützböcken 7, 8 gehalten.

Die Backenrückzugfedern 20 werden in Einhängelöcher 21 der Bremsbackenstege 15 eingehängt. Diese Einhängelöcher 21 befinden sich in der Nähe der Stirnflächen 16, 17 und radial außerhalb der Abstützflächen 18 der Bremsbackenstege 15. Die Backenrückzugfedern 20 überspannen daher im montierten Zustand den Zwischenraum 22 zwischen den Stirnflächen 16, 17 und verlaufen radial außerhalb mit einem bestimmten Abstand zu den Abstützböcken 7, 8. Weiterhin sind die Backenrückzugfedern 20 so ausgebildet und angeordnet, dass sie in der Darstellung von Figur 2 nach oben, d.h. in Richtung zum Elektromagneten 3, nur minimal über die Ebene der Bremsbackenstege 15 vorstehen.

Die Bremsbacken 2 werden in axialer Richtung mittels Niederhaltefedern 23 am Bremsträger 1 gehalten. Diese Niederhaltefedern 23 sind als Kombinationsfedern ausgeführt. Das erste Ende ist als Zugfeder 24 ausgebildet, während das zweite Ende als Druckfeder 25 ausgebildet ist. Die Zugfeder 24 weist einen geringeren Durchmesser als die Druckfeder 25 auf und ist durch eine Bohrung 26 des Bremsbackenstegs 15 hindurchführbar, um auf der einen Seite mit Hilfe eines Durchbruchs mit einer rückwärtigen Sicke 27 in den Bremsträger 1 eingehängt zu werden. Auf der gegenüberliegenden Seite des Bremsbackenstegs 15 sorgt ein vergrößerter Durchmesser der Druckfeder 25 dafür, dass die Niederhaltefeder 23 axial am Bremsbackensteg 15 festgelegt ist und die Druckfeder 25 nicht durch die Bohrung 26 hindurchrutscht.

Die Druckfedern 25 der Kombinationsfedern liegen einerseits, wie bereits ausgeführt, an den Bremsbackenstegen 15 an, während das freie Ende gegen den Elektromagneten 3 drückt, um diesen, wie aus Figur 7 ersichtlich, mit relativ geringer Kraft gegen eine Ankerscheibe 28 zu drücken, die drehfest mit der Bremstrommel 4 verbunden ist. Die Druckfeder 25 ist hierzu spiralförmig gewickelt. Der Durchmesser der einzelnen Wicklungen der Druckfeder 25 nimmt dabei mit zunehmenden Abstand vom Bremsbackensteg 15 derart zu, dass die Druckfedern 25 im vollkommen zusammengedrückten Zustand, wie aus der linken Hälfte von Figur 7 ersichtlich, in einer Ebene liegen. In diesem Zustand ist die Höhe der Druckfedern 25 minimal und entspricht lediglich dem Federdraht-Durchmesser. Mit zunehmendem Verschleiß der Kontaktbereiche, mit welchen der Elektromagnet 3 an der Ankerscheibe 28 anliegt, federt die Druckfeder 25 zunehmend aus, um den Elektromagnet 3 in Anlage an der Ankerscheibe 28 zu halten, siehe rechte Hälfte der Figur 7. Die Steigung der Federkennlinie der Druckfeder 25 stellt sicher, dass der Elektromagnet 3 mit der Ankerscheibe 28 zu jedem Zeitpunkt in Kontakt steht, die Anpresskraft aber sehr gering bleibt.

Die Betätigung der Bremsbacken 2, d.h. das radiale Auseinanderspreizen und Andrücken der Bremsbacken 2 gegen die zylinderförmige Innenumfangswand der Bremstrommel 4, erfolgt durch Drehen des Elektromagneten 3 um die Mittelachse 9 und mittels zweier starr am Elektromagneten 3 befestigter Betätigungsnocken 29, die in die Zwischenräume 22 zwischen den Bremsbackenstegen 15 hineinragen. Der Elektromagnet 3 weist hierzu, wie insbesondere aus Figur 1 ersichtlich, einen im Querschnitt U-förmigen Magnetkörper 30 auf, der einen geschlossenen, kreisförmigen Ring bildet. Zwischen einer inneren Ringwand 31 und einer äußeren Ringwand 32 des Magnetkörpers 30 befindet sich eine nach außen hin isolierte Erregerwicklung 33. Ein auf die Erregerwicklung 33 aufgesetzter Reibbelag 34 bildet zusammen mit den beiden Polschuhen 35 des Elektromagneten 3 eine Ebene.

Die beiden Polschuhe 35 des Elektromagneten 3 sind der Ankerscheibe 28 zugewandt und so gestaltet, dass die dadurch bedingte Lenkung des durch die Erregerwicklung 33 erzeugten und durch den Magnetkörper 30 verstärkten magnetischen Flusses eine maximale Anziehungskraft zwischen Magnetkörper 30 und Ankerscheibe 28 bewirkt. Da die magnetische Leitfähigkeit im Magnetkörper 30 und in der Ankerscheibe 28 deutlich größer als in der umgebenden Luft ist, besteht bei Betätigung immer die Tendenz zur Minimierung des Luftspalts zwischen Magnetkörper 30 und Ankerscheibe 28.

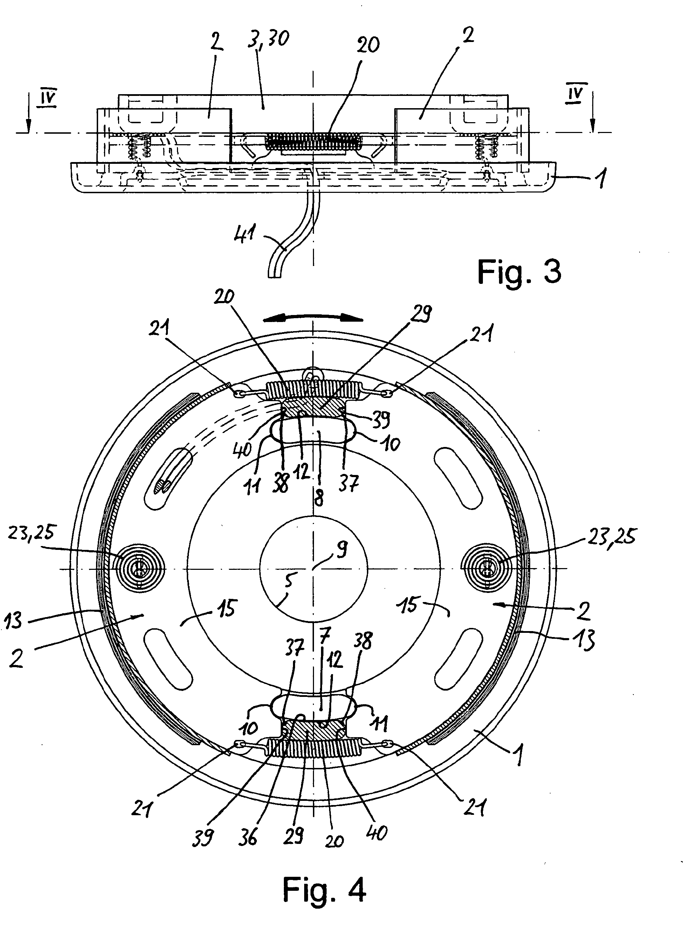

Die beiden Betätigungsnocken 29 sind auf diametral gegenüberliegenden Seiten der Mittelachse 9 starr am Magnetkörper 30 befestigt, beispielsweise an diesem angeformt. Die Betätigungsnocken 29 haben ähnlich wie die Abstützböcke 7, 8 eine Nierenform. Im montierten Zustand des Elektromagneten 3 erstrecken sich die Betätigungsnocken 29 in den Zwischenraum 22 zwischen den Bremsbackenstegen 15 hinein, und zwar in den Zwischenraum, der zwischen den Abstützböcken 7, 8 und den Backenrückzugfedern 20 gebildet wird. Die Betätigungsnocken 29 werden dabei mittels der Abstützböcke 7, 8 radial geführt, wodurch der Elektromagnet 3 zentriert wird. Hierzu sind die radial äußeren Umfangsflächen 12 der Abstützböcke 7, 8 in Umfangsrichtung konvex, insbesondere kreisbogenförmig gekrümmt und als Gleitführungsflächen ausgebildet, an denen entsprechend konkav gekrümmte innere Umfangsflächen 36 (Figur 4) der Betätigungsnocken 29 entlanggleiten können. Radial nach außen werden die Betätigungsnocken 29 durch die Backenrückzugfedern 20 geführt.

Die Betätigungsnocken 29 weisen ferner, in Umfangsrichtung gesehen, vordere und hintere, insbesondere kreisbogenförmig gekrümmte Stirnflächen 37, 38 auf, die an Kontaktabschnitten 39, 40 der Stirnflächen 16, 17 der Bremsbackenstege 15 anliegen oder mit geringem Spiel zu diesen angeordnet sind.

Werden der Elektromagnet 3 und damit die Betätigungsnocken 29, ausgehend von der in Figur 4 gezeigten Mittelstellung, um die Mittelachse 9 herum relativ zum Bremsträger 1 gedreht, drücken die Stirnflächen 37 der Betätigungsnocken 29, die bei dieser Bewegungsrichtung als vordere Stirnflächen bezeichnet werden können, gegen die Kontaktabschnitte 39 der Bremsbackenstege 15 und verschwenken dabei den jeweiligen Bremsbacken 2 um sein entferntes Ende, das am Abstützbock 7 bzw. 8 anliegt. Das Verschieben der Betätigungsnocken 29 in Umfangsrichtung bewirkt somit, dass dasjenige Ende des Bremsbackenstegs 15, gegen das der Betätigungsnocken 29 drückt, vom benachbarten Abstützbock 7, 8 und um den entfernteren Abstützbock 7, 8 herum verschwenkt wird. Hierdurch werden die Bremsbacken 2 bzw. die Bremsbeläge 13 gegen die Bremstrommel 4 gedrückt, was einen entsprechenden Bremsvorgang bewirkt. Werden die Betätigungsnocken 29 wieder in ihre mittige Ausgangslage zurück gedreht, bewirken die Backenrückzugfedern 20 ein Zurückschwenken der Bremsbacken 2 in ihre Ausgangslage, in der beide Enden jedes Bremsbackenstegs 15 an den Abstützböcken 7, 8 anliegen.

Werden der Elektromagnet 3 und damit die Betätigungsnocken 29 in umgekehrter Richtung, d.h. entgegen dem Uhrzeigersinn, gedreht, wird in entsprechender Weise das jeweils andere Ende eines jeden Bremsbackens 2 vom Abstützbock 7, 8 weg bewegt, wodurch die Bremsbacken 2 gespreizt und zur Anlage an die Bremstrommel 4 gebracht werden.

In beiden Drehrichtungen sind beide Bremsbacken auflaufend und erzeugen die gleiche Bremswirkung.

Der Elektromagnet 3 ist, in radialer Richtung gesehen, nahe innerhalb der Bremsbelagträger 14 angeordnet und steht radial nach innen nicht weiter vor als die Bremsbackenstege 15.

Die Drehung des Elektromagneten 3 und damit der Betätigungsnocken 29 wird dadurch bewirkt, dass an die beiden elektrischen Anschlussleitungen 41 der Erregerwicklung 33 eine Spannung angelegt wird. Hierdurch wird im Magnetkörper 30 eine magnetische Kraft erzeugt, die den Elektromagneten 3 gegen die Ankerscheibe 28 zieht. Hierdurch entsteht zwischen der Ankerscheibe 28, die drehfest mit der Bremstrommel 4 verbunden ist, und dem Elektromagneten 3 eine Reibkraft, welche den Elektromagneten 3 und damit die Betätigungsnocken 29 ebenfalls um die Mittelachse 9 dreht.

Durch die Betätigungsnocken 29 erfolgt, wie bereits ausgeführt, ein Verschwenken der Bremsbacken 2 gegen die Kraft der Backenrückzugfedern 20. Der Elektromagnet 3 wird solange mitgenommen, bis eine Gegenkraft in gleicher Höhe der Reibkraft vorhanden ist. Diese Gegenkraft ist bei Anlage der Bremsbacken 2 an der Reibfläche der Bremstrommel 4 erreicht. Ab diesem Zustand unterbricht die Haftung zwischen dem Elektromagneten 3 und der Ankerscheibe 28 und beide Körper gleiten aufeinander ab. Nach erfolgtem Bremsvorgang bringen die beiden Backenrückzugfedern 20 die Bremsbacken 2 wieder in ihre Mittellage zurück.

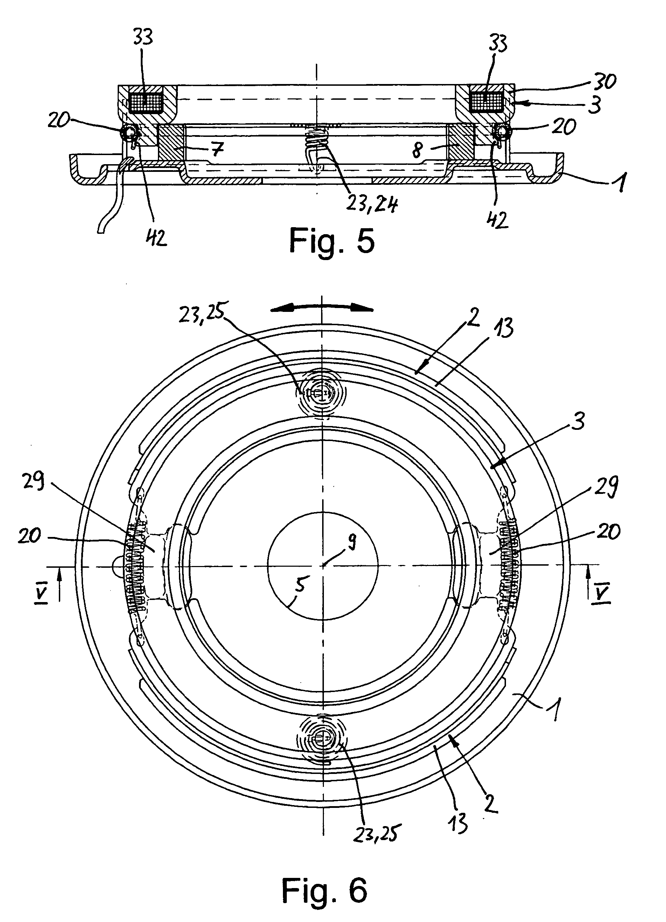

Wie aus Figur 5 ersichtlich, weisen die Betätigungsnocken 29 an ihrem dem Bremsträger 1 zugewandten Ende einen radial nach außen vorstehenden Radialvorsprung 42 auf, der die Backenrückzugfedern 20 hintergreift. Hierdurch kann ein unbeabsichtigtes Lösen des Elektromagneten 3 vom Bremsträger 1 in axialer Richtung während der Montage verhindert werden. Bei der Montage des Elektromagneten 3 müssen die Backenrückzugfedern 20 nur geringfügig radial nach außen gedrückt werden, damit die Betätigungsnocken 29 in den Zwischenraum zwischen den Backenrückzugfedern 20 und den Abstützböcken 7, 8 eingeführt werden können.

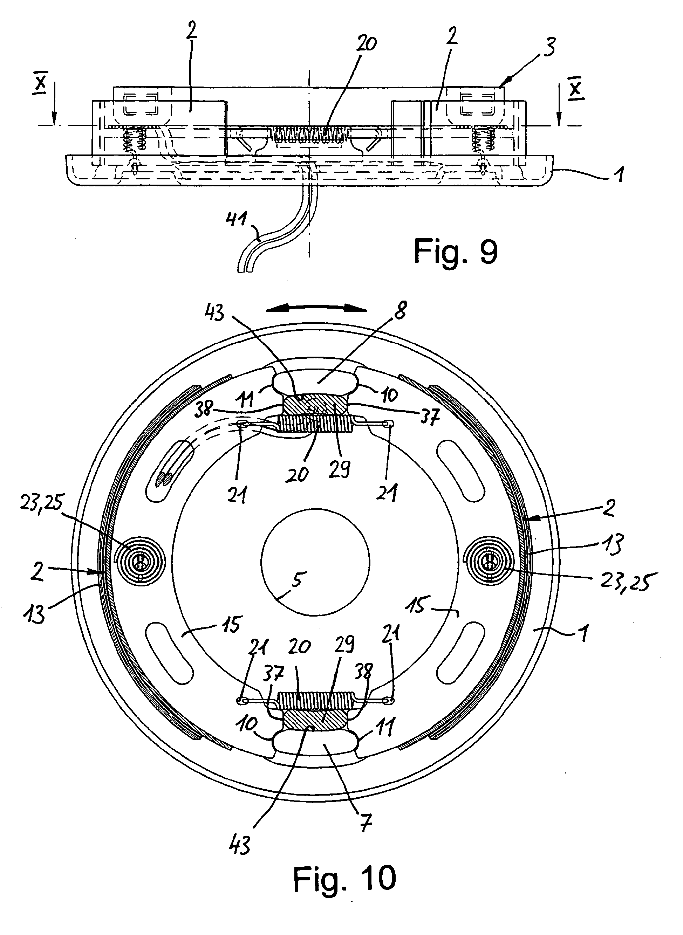

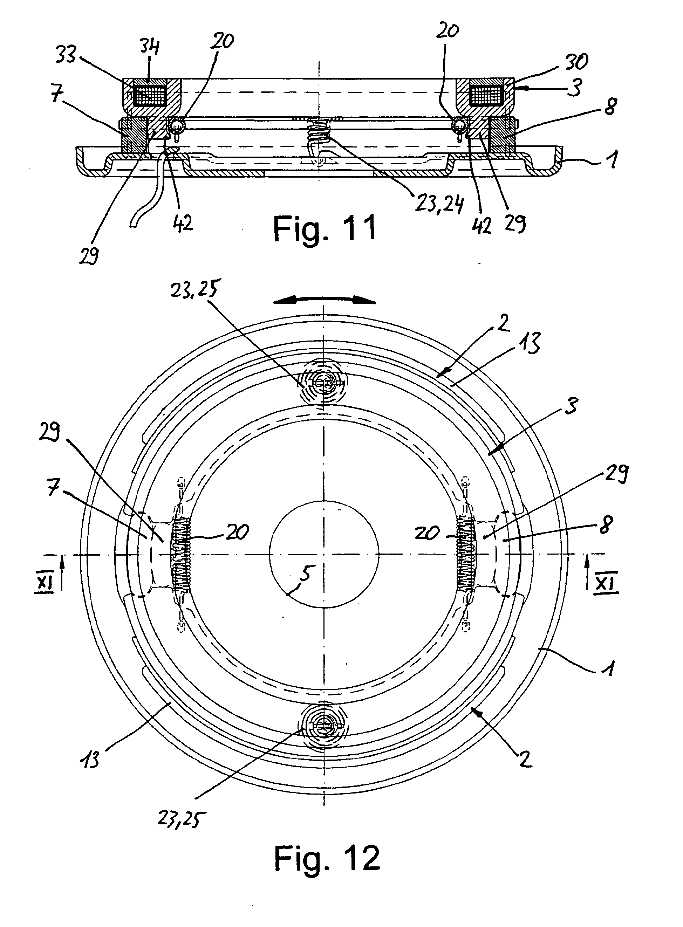

In den Figuren 9 bis 12 ist eine zweite Ausführungsform der erfindungsgemäßen Innenbackenbremse dargestellt. Diese zweite Ausführungsform unterscheidet sich von der ersten Ausführungsform im Wesentlichen dadurch, dass die Abstützböcke 7, 8 radial außerhalb der Betätigungsnocken 29 angeordnet sind, während bei der ersten Ausführungsform die Abstützböcke 7, 8 radial innerhalb der Betätigungsnocken 29 angeordnet sind. Demgemäß befinden sich bei der zweiten Ausführungsform die Gleitführungsflächen für die radiale

Führung der Betätigungsnocken 29 an der radial inneren Umfangsfläche 43 der Abstützböcke 7, 8 bzw. an der radial äußeren Umfangsfläche der Betätigungsnocken 29. Weiterhin sind bei der zweiten Ausführungsform die Backenrückzugfedern 20 radial innerhalb der Betätigungsnocken 29 angeordnet. Die Radialvorsprünge 42, die bei der in Figur 5 dargestellten ersten Ausführungsform radial nach außen gerichtet sind, erstrecken sich bei der zweiten Ausführungsform von den Betätigungsnocken 29 radial nach innen, um in entsprechender Weise die Backenrückzugfedern 20 zu hintergreifen.

Bei beiden Ausführungsformen können die Radialvorsprünge 42 auf einfache Weise durch einen entsprechenden Hinterschnitt der Betätigungsnocken 29 gebildet werden.

Im Rahmen der Erfindung sind eine Vielzahl von Variationen möglich. Die Ankerscheibe 28, die drehfest mit der Bremstrommel 4 verbunden und senkrecht zur Mittelachse 9 angeordnet ist, kann in axialer Richtung fest oder axial verschiebbar an der Bremstrommel 4 befestigt sein. Weiterhin ist es prinzipiell auch möglich, auf die Ankerscheibe 28 zu verzichten und den Elektromagneten 3 direkt mit der Bremstrommel 4 in Reibeingriff treten zu lassen.

## Patentansprüche

1. Innenbackenbremse mit einer elektromagnetischen Betätigungseinrichtung zum Betätigen von zwei mit einer Bremstrommel (4) zusammenwirkenden Bremsbacken (2), die an einem Bremsträger (1) abgestützt sind, wobei :
- die Betätigungseinrichtung einen ringförmigen Elektromagneten (3) umfasst, der in erregtem Zustand mittels Magnetkraft derart gegen die Bremstrommel (4) oder gegen eine drehfest mit der Bremstrommel (4) verbundene Ankerscheibe (28) gezogen wird, dass der Elektromagnet (3) durch Reibkraft über einen gewissen Weg mit der sich drehenden Bremstrommel (4) mitgedreht wird,
- der Elektromagnet (3) einen ringförmigen Magnetkörper (30) und zwei diametral gegenüber angeordnete, fest mit dem Magnetkörper (30) verbundene Betätigungsnocken (29) zur Betätigung der Bremsbacken (2) aufweist,
- der Bremsträger (1) zwei diametral gegenüber angeordnete, stationäre Abstützböcke (7, 8) aufweist,
- die Bremsbacken (2) jeweils einen Bremsbackensteg (15) mit Stirnflächen (16, 17) aufweisen, an denen Abstützflächen (18, 19) zur schwenkbaren Abstützung an den Abstützböcken (7, 8) ausgebildet sind,
**dadurch gekennzeichnet, dass** die Betätigungsnocken (29) des Elektromagneten (3) in Nachbarschaft der Abstützböcke (7, 8) angeordnet sind und sich in die Zwischenräume (22) zwischen den sich gegenüberliegenden Stirnflächen (16, 17) der Bremsbackenstege (15) hinein erstrecken, derart, dass bei einem Verdrehen des Elektromagneten (3) in Umfangsrichtung die Betätigungsnocken (29) an jeweils einer Stirnfläche (16, 17) der Bremsbackenstege (15) anliegen und diese Stirnfläche (16, 17) vom benachbarten Abstützbock entfernen bzw. an diesen annähern.

2. Innenbackenbremse nach Anspruch 1, **dadurch gekennzeichnet, dass** die Betätigungsnocken (29) radial außerhalb der Abstützböcke (7, 8) angeordnet sind.

3. Innenbackenbremse nach Anspruch 1, **dadurch gekennzeichnet, dass** die Betätigungsnocken (29) radial innerhalb der Abstützböcke (7, 8) angeordnet sind.

4. Innenbackenbremse nach einem der vorhergehenden Ansprüche, **dadurch gekennzeichnet, dass** der Magnetkörper (30) mittels der Betätigungsnocken (29) radial an den Abstützböcken (7, 8) geführt ist.

5. Innenbackenbremse nach Anspruch 4, **dadurch gekennzeichnet, dass** die Abstützböcke (7, 8) radial äußere oder innere Umfangsflächen (12, 43) aufweisen, die als Gleitführungsflächen für die Betätigungsnocken (29) ausgebildet sind.

6. Innenbackenbremse nach einem der vorhergehenden Ansprüche, **dadurch gekennzeichnet, dass** die Bremsbacken (2) mittels Backenrückzugfedern (20) gegenseitig vorgespannt sind, die dicht radial außerhalb oder innerhalb der Betätigungsnocken (29) angeordnet sind, und dass die Betätigungsnocken (29) einen Radialvorsprung (42) aufweisen, der die Backenrückzugfedern (20) hintergreift und ein axiales Rückhaltemittel für den Magnetkörper (30) am Bremsträger (1) darstellt.

7. Innenbackenbremse nach einem der vorhergehenden Ansprüche, **dadurch gekennzeichnet, dass** der Elektromagnet (3) axial beweglich zwischen Bremsträger (1) und Bremstrommel (4) oder Ankerscheibe (28) angeordnet und mittels Federn axial in Richtung Bremstrommel (4) oder Ankerscheibe (28) vorgespannt ist, so dass der Elektromagnet (3) in permanenter Anlage an der Bremstrommel (4) bzw. Ankerscheibe (28) gehalten wird.

8. Innenbackenbremse nach Anspruch 7, **dadurch gekennzeichnet, dass** die Federn aus Druckfedern (25) bestehen, die sich einerseits an den Bremsbackenstegen (15) und andererseits am Magnetkörper (30) abstützen.

9. Innenbackenbremse nach Anspruch 8, **dadurch gekennzeichnet, dass** die Druckfedern (25) einteilig mit Niederhaltefedern (23) ausgebildet sind, die sich durch die Bremsbackenstege (15) hindurch erstrecken und die Bremsbacken (2) axial am Bremsträger (1) halten.

10. Innenbackenbremse nach einem der vorhergehenden Ansprüche, **dadurch gekennzeichnet, dass** der Magnetkörper (30) im Querschnitt U-förmig ist und eine radial äußere Ringwand (32) und eine radial innere Ringwand (31) aufweist, zwischen denen eine Erregerwicklung (33) und ein Reibbelag (34) angeordnet sind, der mit der Bremstrommel (4) oder der Ankerscheibe (28) in Anlage bringbar ist.

## Claims

1. Inside shoe brake having an electromagnetic actuation device for actuating two brake shoes (2) which cooperate with a brake drum (4) and are supported on a brake backing plate (1), wherein:
- the actuation device comprises an annular electromagnet (3) which, when excited, is drawn by magnetic force against the brake drum (4) or an anchor plate (28) connected to the brake drum (4) for conjoint rotation such that friction causes the electromagnet (3) to rotate about a certain path together with the rotating brake drum (4),
- the electromagnet (3) comprises an annular magnetic member (30) and two diametrically opposed actuating cams (29) which are fixed to the magnetic member (30) and designed to actuate the brake shoes (2),
- the brake backing plate (1) comprises two diametrically opposed, stationary support lugs (7, 8),
- the brake shoes (2) each comprise a brake shoe web (15) having end faces (16, 17) on which support faces (18, 19) are formed for pivotable support at the support lugs (7, 8), **characterised in that** the actuating cams (29) of the electromagnet (3) are in the vicinity of the support lugs (7, 8) and extend into the clearances (22) between the opposing end faces (16, 17) of the brake shoe webs (15) such that, when the electromagnet (3) rotates in the circumferential direction, the actuating cams (29) each rest on one of the end faces (16, 17) of the brake shoe webs (15) and these end faces (16, 17) move away from or closer to the adjacent support lug.

2. Inside brake shoe according to claim 1, **characterised in that** the actuating cams (29) are radially outside the support lugs (7, 8).

3. Inside brake shoe according to claim 1, **characterised in that** the actuating cams (29) are radially inside the support lugs (7, 8).

4. Inside brake shoe according to any of the preceding claims, **characterised in that** the magnetic member (30) is radially guided on the support lugs (7, 8) by means of the actuating cams (29).

5. Inside brake shoe according to claim 4, **characterised in that** the support lugs (7, 8) comprise radially outer or inner circumferential faces (12, 43) formed as sliding guide faces for the actuating cams (29).

6. Inside shoe brake according to any of the preceding claims, **characterised in that** the brake shoes (2) are prestressed on either side by means of shoe return springs (20) which are arranged radially just outside or inside the actuating cams (29), and **in that** the actuating cams (29) comprise a radial projection (42) which engages behind the shoe return springs (20) and constitutes an axial retention means for the magnetic member (30) on the brake backing plate (1).

7. Inside shoe brake according to any of the preceding claims, **characterised in that** the electromagnet (3) is axially movable between the brake backing plate (1) and the brake drum (4) or anchor plate (28) and is axially prestressed in the direction of the brake drum (4) or anchor plate (28) by means of springs, such that the electromagnet (3) is held in permanent abutment against the brake drum (4) or anchor plate (28).

8. Inside shoe brake according to claim 7, **characterised in that** the springs consist of compression springs (25) which are supported on one side by the brake shoe webs (15) and on the other side by the magnetic member (30).

9. Inside shoe brake according to claim 8, **characterised in that** the compression springs (25) are formed in one piece with retaining springs (23) which extend through the brake shoe webs (15) and hold the brake shoes (2) axially on the brake backing plate (1).

10. Inside shoe brake according to any of the preceding claims, **characterised in that** the magnetic member (30) has a U-shaped cross section and comprises a radially outer ring wall (32) and a radially inner ring wall (31), between which an exciting winding (33) and a friction lining (34) are arranged, which friction lining can be brought into abutment against the brake drum (4) or anchor plate (28).

## Revendications

1. Frein à mâchoires intérieures avec un système d'actionnement électromagnétique pour actionner deux mâchoires de frein (2) qui coopèrent avec un tambour de frein (4) et qui sont soutenues sur un support de frein (1), dans lequel
- le système d'actionnement comprend un électroaimant (3) de forme annulaire qui, dans l'état excité, est tiré au moyen d'une force magnétique contre le tambour de frein (4) ou contre une plaque d'ancrage (28) reliée solidairement en rotation avec le tambour de frein (4) de telle manière que l'électroaimant (3) est entraîné conjointement par une force de friction sur un certain trajet avec le tambour de frein (4) en rotation,
- l'électroaimant (3) comprend un corps d'aimant (30) de forme annulaire et deux cames d'actionnement (29) agencées en opposition diamétrale et reliées fermement avec le corps d'aimant (30) pour actionner les mâchoires de frein (2),
- le support de frein (1) comprend deux blocs de soutien stationnaires (7, 8) agencés en opposition diamétrale,
- les mâchoires de frein (2) comprennent chacune une âme de mâchoire de frein (15) avec des faces frontales (16, 17) sur lesquelles sont réalisées des surfaces de soutien (18, 19) pour un soutien en pivotement sur les blocs de soutien (7, 8),
**caractérisé en ce que** les cames d'actionnement (29) de l'électroaimant (3) sont agencées au voisinage des blocs de soutien (7, 8), et s'étendent en pénétration dans les intervalles (22) entre les faces frontales opposées (16, 17) des âmes (15) des mâchoires de frein, de telle façon que lors d'une rotation de l'électroaimant (3) en direction périphérique, les cames d'actionnement (29) s'appliquent respectivement contre une face frontale (16, 17) des âmes (15) des mâchoires de frein, et ces faces frontales (15, 17) s'éloignent du bloc de soutien voisin ou se rapprochent de celui-ci.

2. Frein à mâchoires intérieures (1), **caractérisé en ce que** les cames d'actionnement (29) sont agencées radialement à l'extérieur des blocs de soutien (7, 8).

3. Frein à mâchoires intérieures selon la revendication 1, **caractérisé en ce que** les cames d'actionnement (29) sont agencées radialement à l'intérieur des blocs de soutien (7, 8).

4. Frein à mâchoires intérieures selon l'une des revendications précédentes, **caractérisé en ce que** le corps d'aimant (30) est guidé radialement contre les blocs de soutien (7, 8) au moyen d'came d'actionnement (29).

5. Frein à mâchoires intérieures selon la revendication 4, **caractérisé en ce que** les blocs de soutien (7, 8) comportent des surfaces périphériques radialement extérieures ou radialement intérieures (12, 43), qui sont réalisées sous forme de surfaces de guidage à coulissement pour les cames d'actionnement (29)

6. Frein à mâchoires intérieures selon l'une des revendications précédentes, **caractérisé en ce que** les mâchoires de frein (2) sont précontraintes réciproquement au moyen de ressorts de rappel de mâchoire (20), qui sont agencés très proches radialement à l'extérieur ou à l'intérieur des cames d'actionnement (29), et **en ce que** les cames d'actionnement (29) comportent une saillie radiale (42) qui engage les ressorts de rappel de mâchoire (20) par l'arrière, et représentent un moyen de retenue axiale pour le corps dément (30) sur le support de frein (1)

7. Frein à mâchoires intérieures selon l'une des revendications précédentes, **caractérisé en ce que** l'électroaimant (3) est agencé axialement mobile entre le support de frein (1) et le tambour de frein (4) ou la plaque d'ancrage (28), et est précontraint au moyen de ressorts axialement en direction du tambour de frein (4) ou de la plaque d'ancrage (28), de sorte que l'électroaimant (3) est maintenu en contact permanent contre le tambour de frein (4) ou contre la plaque d'ancrage (28).

8. Frein à mâchoires intérieures selon la revendication 7, **caractérisé en ce que** les ressorts sont des ressorts de compression (25) qui s'appuient d'une part contre les âmes (15) des mâchoires de frein et d'autre part contre le corps d'aimant (30).

9. Frein à mâchoires intérieures selon la revendication 8, **caractérisé en ce que** les ressorts de compression (25) sont réalisés d'une seule pièce avec des ressorts de maintien vers le bas (23) qui s'étendent à travers les âmes (15) des mâchoires de frein et qui retiennent les mâchoires de frein (2) axialement sur le support de frein (1).

10. Frein à mâchoires intérieures selon l'une des revendications précédentes, **caractérisé en ce que** le corps d'aimant (30) présente en section transversale une forme en U, et comporte une paroi annulaire radialement extérieure (32) et une paroi annulaire radialement intérieure (31), entre lesquelles sont agencées une bobine d'excitation (33) et une garniture de friction (34), laquelle peut être amenée en contact avec le tambour de frein (4) ou avec la plaque d'ancrage (28).
